# DEMANDE DE BREVET EUROPEEN

(11) **EP 4 763 546 A1**
(43) Date de publication de la demande: **24.06.2026**
(21) Numéro de dépôt: 25224249.0
(22) Date de dépôt: 17.12.2025
(51) Int. Cl.: B60G 7/00, B60G 21/05

(54) **ESSIEU POUR VÉHICULE AUTOMOBILE**

(30) Priorité: 23.12.2024 FR 2415090
(71) Demandeur: Renault s.a.s, 92100 Boulogne Billancourt (FR)
(72) Inventeur: GALLO, Emmanuel, 72000 LE MANS (FR); MAGNIN, Christophe, 72000 LE MANS (FR)

(57) **Abrégé**

L'invention concerne un essieu (1) pour un véhicule automobile comportant un bras de suspension (2, 3) et une tête d'essieu (9) qui est soudée audit bras de suspension (2, 3), ladite tête d'essieu (9) comportant un flasque de montage (10) comportant trois orifices (15, 16, 17) qui sont chacun destinés à recevoir un organe de fixation (18) pour fixer un organe de support de roue à ladite tête d'essieu (9).

## Description

L'invention concerne le domaine des véhicules automobiles.

L'invention vise plus spécifiquement un essieu et notamment un essieu souple d'un véhicule automobile.

Un essieu souple, également appelé essieu déformable ou essieu semi-rigide, est un composant couramment utilisé dans les véhicules automobiles, notamment pour les essieux arrière des véhicules de tourisme. L'essieu souple est généralement associé à des ressorts hélicoïdaux et des amortisseurs qui travaillent ensemble pour absorber les chocs et maintenir la stabilité du véhicule.

L'essieu souple comporte deux bras de suspension reliant chacun l'une des roues arrière à la caisse et une traverse de torsion reliant les deux bras de suspension l'un à l'autre. Chacun des bras de suspension est équipé d'une tête d'essieu qui est soudée audit bras de suspension et sert de point de fixation pour un roulement de roue.

Dans l'état de la technique, chaque tête d'essieu comporte quatre perçages qui sont chacun destinés à recevoir un organe de fixation permettant de fixer le roulement de roue au bras de suspension.

Un tel essieu n'est pas entièrement satisfaisant car il nécessite un grand nombre d'organes de fixation pour attacher chaque roulement de roue à l'essieu, ce qui entraîne une masse et un coût importants. Or, afin de réduire les émissions de dioxyde de carbone des véhicules à moteur thermique ou d'augmenter l'autonomie des véhicules électriques, il est crucial de chercher à alléger au maximum les composants des véhicules.

Aussi, un problème qui se pose et que vise à résoudre la présente invention est de fournir un essieu moins couteux et présentant une masse plus faible tout en assurant une résistance aux contraintes s'exerçant sur la tête d'essieu.

Dans le but de résoudre ce problème, et selon un premier objet, il est proposé un essieu pour un véhicule automobile comportant un bras de suspension et une tête d'essieu qui est soudée audit bras de suspension, ladite tête d'essieu comportant un flasque de montage comportant trois orifices qui sont chacun destinés à recevoir un organe de fixation pour fixer un organe de support de roue à ladite tête d'essieu.

Ainsi, le nombre d'organes de fixation est limité à trois par tête d'essieu, ce qui permet de réduire la masse et les coûts associés à la fonction de fixation des roues à l'essieu.

Selon des modes de réalisation, un tel essieu peut comporter une ou plusieurs des caractéristiques suivantes.

Selon un mode de réalisation, les trois orifices se composent d'un orifice supérieur et de deux orifices inférieurs qui présentent chacun un centre, les centres des orifices définissant un triangle qui est isocèle, une médiane du triangle qui passe par le centre de l'orifice supérieur étant verticale et formant un axe de symétrie du triangle. Ceci permet d'équilibrer les efforts s'exerçant sur les organes de fixation et sur la tête d'essieu.

Selon un mode de réalisation, la médiane (M) est destinée à passer par un axe géométrique de rotation de la roue.

Selon un mode de réalisation, le flasque de montage présente une largeur qui diminue depuis une zone inférieure dans laquelle sont ménagés les orifices inférieurs vers une zone supérieure dans laquelle est ménagé l'orifice supérieur. Ceci permet de diminuer la masse de la tête d'essieu.

Selon un mode de réalisation, le flasque de montage comporte une ouverture centrale qui est ménagée entre les trois orifices. Une telle ouverture centrale permet d'alléger la tête d'essieu. Elle peut également permettre le passage d'un ou plusieurs câbles connectés à un capteur.

Selon un mode de réalisation, l'ouverture centrale présente une forme générale de quadrilatère orthogonal arrondis présentant deux diagonales perpendiculaires dont l'une est alignée avec la médiane (M) du triangle, ladite forme générale de quadrilatère orthogonal arrondis présentant un sommet supérieur disposé en-dessous de l'orifice supérieur et trois autres sommets situés à l'extérieur du triangle. Cette forme est optimisée pour alléger la masse de la tête d'essieu, compte-tenu de la disposition triangulaire des trois orifices de passage des organes de fixation.

Selon un mode de réalisation, les orifices sont ménagés dans une portion supérieure du flasque de montage qui fait saillie au-dessus du bras de suspension. Cela permet d'accéder à la face interne de la surface de montage pour installer les boulons.

Selon un mode de réalisation, la tête d'essieu comporte deux ailes de fixation qui font saillie perpendiculairement au flasque de montage de part et d'autre dudit flasque de montage, lesdites ailes de fixation comportant un bord d'accostage présentant une concavité dans laquelle le bras de suspension est au moins partiellement inséré et le long de laquelle ledit bord d'accostage est soudé au bras de suspension.

Selon un mode de réalisation, la tête d'essieu est formée d'une tôle emboutie présentant une épaisseur comprise entre 4 et 8 mm.

Selon un mode de réalisation, la tête d'essieu est équipée d'une plaque de renfort qui est soudée contre une face externe du flasque de montage, ladite plaque de renfort comportant trois perçages qui sont chacun ménagés en regard de l'un des orifices. Une telle plaque de renfort permet, d'une part, d'augmenter la rigidité et la résistance de l'essieu et, d'autre part, de créer un empilage créant une réserve élastique additionnelle, empêchant un desserrage des organes de fixation.

Selon un mode de réalisation, la plaque de renfort s'étend vers le bas sensiblement jusqu'à un plan horizontal médian du bras de suspension.

Selon un mode de réalisation, la plaque de renfort comporte un bord inférieur présentant une concavité.

Selon un mode de réalisation, l'essieu comprend en outre un roulement de roue et trois organes de fixation qui passent chacun au travers de l'un de trois orifices du flasque de montage et qui fixent le roulement de roue à la tête d'essieu. Cela permet à la plaque de renfort de mieux transférer les efforts vers le bras de suspension, réduisant ainsi davantage le risque de déformations indésirables de la tête d'essieu.

Selon un mode de réalisation, les organes de fixation sont des boulons comportant chacun :
- une vis filetée qui passe au travers d'un perçage ménagé dans une bride du roulement de roue et dans l'un des orifices du flasque de montage ; et
- un boulon qui est monté sur ladite vis filetée.

Selon un mode de réalisation, la vis filetée présente un diamètre compris entre 10 et 14 mm. Ceci contribue à assurer une résistance satisfaisante des trois organes de fixation.

Selon un mode de réalisation, la vis filetée présente une limite élastique supérieure ou égale à 900 MPa. Ceci contribue également à la fiabilité de la fixation.

Selon un mode de réalisation, la vis filetée présente une limite à la rupture en traction supérieure ou égale à 1040 MPa. Ceci contribue également à la fiabilité de la fixation.

Selon un mode de réalisation, l'essieu comporte deux bras de suspension qui sont reliés l'un à l'autre par une traverse et deux têtes d'essieu du type précité qui sont respectivement soudées à l'un et l'autre des deux bras de suspension.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1] est une vue de dessus d'un essieu souple arrière d'un véhicule automobile ;
[Fig. 2] est une vue partielle latérale externe d'un essieu montrant une tête d'essieu et sa fixation sur un bras de suspension ;
[Fig. 3] est une vue partielle latérale interne d'un essieu montrant la tête d'essieu, le bras de suspension auquel elle est fixée et la fixation du roulement de roue à la tête d'essieu ;
[Fig. 4] est un schéma illustrant le triangle défini par les trois orifices ménagés dans la tête d'essieu.

Sur les figures, les directions X, Y, Z correspondent respectivement aux directions longitudinale, transversale et verticale du véhicule sur lequel est monté l'essieu, l'axe X étant dirigé vers l'arrière du véhicule.

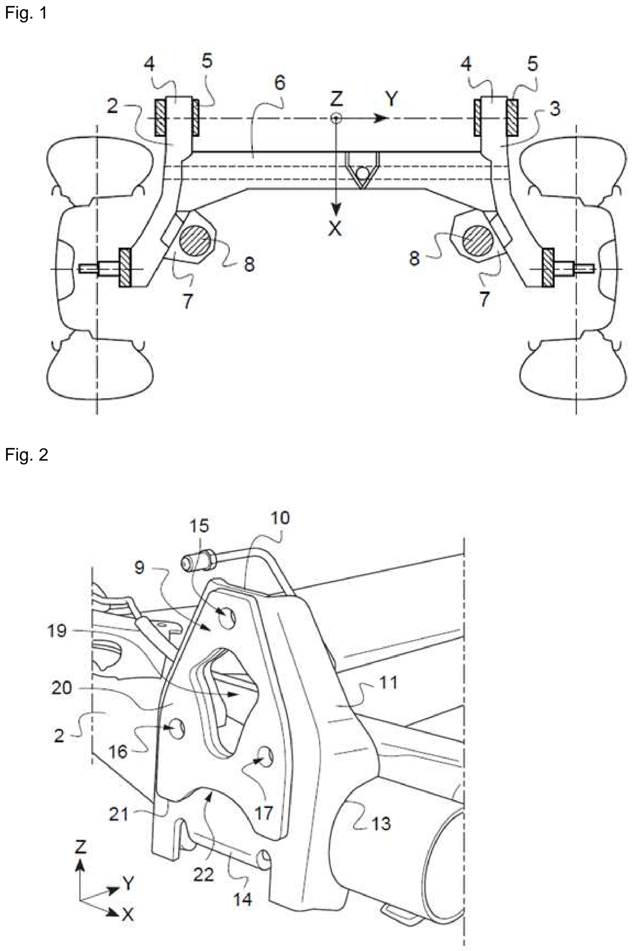

La figure 1 représente un essieu 1, souple, d'un train arrière d'un véhicule automobile. Il comporte une structure en H.

L'essieu 1 comporte deux bras de suspension 2, 3. L'une des extrémités de chaque bras de suspension 2, 3, à savoir son extrémité avant 4, est articulée à la caisse du véhicule via une articulation élastique 5. Une telle articulation élastique 5 comporte, par exemple, une bague en élastomère montée radialement entre deux bagues métalliques. Elle autorise ainsi une rotation limitée des bras de suspension 2, 3 par rapport à la caisse tout en filtrant les vibrations et les chocs.

Les bras de suspension 2, 3 sont reliés l'un à l'autre par une traverse 6. Dans le mode de réalisation représenté, la traverse 6 et les bras de suspension 2, 3 sont constitués par des tubes en acier qui sont soudés entre eux. La traverse 6 est apte à se déformer en torsion, notamment lorsque le véhicule rencontre des irrégularités sur la route, ce qui autorise un déplacement relatif limité des roues arrière l'une par rapport à l'autre. Cela améliore le confort de conduite en réduisant les impacts des bosses et des trous.

Chaque bras de suspension 2, 3 est équipé d'une coupelle de suspension 7 qui est soudée audit bras de suspension 2, 3 et qui supporte une extrémité de l'un des ressorts de suspension 8. Chaque bras de suspension 2, 3 est également équipé d'une patte de fixation, non représentée, à laquelle est fixée une extrémité d'un amortisseur de suspension, également non représenté.

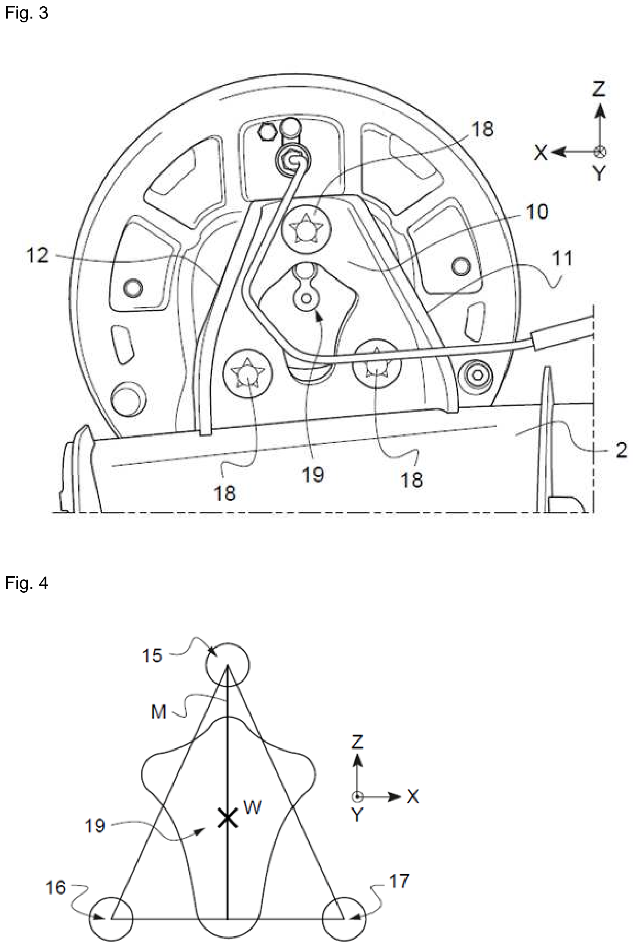

Chacun des bras de suspension 2, 3 est également équipé d'une tête d'essieu 9, représentée sur les figures 2 et 3, qui est destinée à assurer la fixation, audit bras de suspension 2, 3, d'un roulement de roue et d'un dispositif de freinage.

Les roulements de roue sont avantageusement de la troisième génération. De tels roulements de roue intègrent le roulement de roue et le moyeu en une seule unité compacte. En outre, l'une des bagues du roulement de roue est équipée d'une bride comportant des perçages destinés au passage des organes de fixation pour fixer, à la tête d'essieu, le roulement de roue ainsi que le stator, c'est-à-dire la partie fixe, du dispositif de freinage. L'autre bague du roulement de roue est équipée d'une bride assurant la fixation de la jante et du rotor, c'est-à-dire la partie mobile, du dispositif de freinage.

La tête d'essieu 9 est réalisée en métal, de préférence en acier, et est rapportée et soudée au bras de suspension 2, à une extrémité arrière dudit bras de suspension 2. La tête d'essieu 9 est, par exemple, formée d'une tôle emboutie. La tôle présente une épaisseur comprise entre 4 et 8 mm, par exemple de l'ordre de 6 mm.

La tête d'essieu 9 comporte un flasque de montage 10 qui sert de point de fixation pour un moyen de support de roue et plus particulièrement pour le roulement de roue. Le flasque de montage 10 s'étend dans un plan longitudinal, perpendiculaire à l'axe géométrique de rotation de la roue.

La tête d'essieu 9 comporte, en outre, de part et d'autre du flasque de montage 10, deux ailes de fixation 11, 12, qui permettent de souder la tête d'essieu 9 au bras de suspension 2. Les deux ailes de fixation 11, 12 s'étendent suivant des plans sensiblement perpendiculaires au plan du flasque de montage 10. Les ailes de fixation 11, 12 comportent chacun un bord d'accostage 13 qui présente une concavité complémentaire de la convexité du bras de suspension 2. Cette concavité permet à une partie de la section du bras de suspension 2 de s'insérer dans les ailes de fixation 11, 12. Les ailes de fixation 11, 12 sont soudées, au bras de suspension 2, le long de ladite concavité du bord d'accostage 13, par exemple par une soudure à l'arc.

Dans le mode de réalisation représenté, la tête d'essieu 9 comporte également une languette 14 qui est repliée sous le bras de suspension 2, offrant ainsi un point de support supplémentaire et renforçant la structure de l'ensemble. La languette 14 est avantageusement soudée à la portion inférieure du bras de suspension 2, ce qui permet d'augmenter encore davantage la surface de soudage de la tête d'essieu 9 au bras de suspension 2.

Le flasque de montage 10 comporte trois orifices 15, 16, 17 recevant des organes de fixation 18, permettant de fixer le roulement de roue à la tête d'essieu 9. Les organes de fixation 18, représentés sur la figure 3, sont par exemple des boulons. De tels boulons comportent une vis équipée d'une tige filetée qui passe, d'une part, au travers d'un perçage ménagé dans une bride du roulement de roue et, d'autre part, au travers de l'un des orifices 15, 16, 17 du flasque de montage 10. Un écrou est vissé sur la tige filetée et vient en appui contre la face interne du flasque de montage 10. Les boulons sont, par exemple, de type M10, M12 ou M14, c'est-à-dire qu'ils comportent un filetage métrique et que leur vis présente un diamètre de 10, 12 ou 14 mm. Les vis présentent, de préférence, une limite élastique supérieure ou égale à 900 MPa et une limite à la rupture en traction supérieure ou égale à 1040 MPa.

Les trois orifices 15, 16, 17 sont ménagés dans une portion supérieure du flasque de montage 10 qui fait saillie au-dessus de la partie du bras de suspension à laquelle ladite tête d'essieu est fixée. Les trois orifices 15, 16, 17 sont donc situés au-dessus du bras de suspension 2, permettant ainsi la fixation de l'écrou des boulons contre la face interne de cette flasque de montage 10.

Comme représenté de manière schématique sur la figure 4, les centres des trois orifices 15, 16, 17 définissent un triangle qui est orienté de façon qu'un de ses sommets soit dirigé vers le haut. La médiane M passant par le sommet du triangle, à savoir le centre de l'orifice supérieur 15, est donc orientée verticalement.

En outre, la médiane M passe avantageusement par l'axe géométrique W de rotation de la roue. De plus, le triangle est un triangle isocèle de sorte que la distance entre le centre de l'orifice supérieur 15 et celui de l'un des orifices inférieurs 16 est égale à la distance entre le centre de l'orifice supérieur 15 et celui de l'autre orifice inférieur 17. La médiane M forme ainsi un axe de symétrie dudit triangle. Ceci permet d'équilibrer les efforts s'exerçant sur les organes de fixation 18 et sur la tête d'essieu 9.

Par ailleurs, la portion supérieure de la tête d'essieu 9 présente une dimension prise dans la direction longitudinale, correspondant à sa largeur, qui diminue du bas vers le haut. La largeur du flasque de montage 10 diminue donc depuis la zone inférieure dans laquelle sont ménagés les orifices inférieurs 16, 17 vers la zone supérieure dans laquelle est ménagé l'orifice supérieur 15.

En outre, dans le mode de réalisation représenté, la distance entre le centre des deux orifices inférieurs 16, 17 est inférieure à la distance entre les centres des deux orifices inférieurs 16, 17 et celui de l'orifice supérieur 15. Ceci permet de limiter la largeur du flasque de montage 10 et, par conséquent, de limiter encore davantage la masse de la tête d'essieu 9.

En revenant aux figures 2 et 3, on observe que la tête d'essieu 9 comporte, en outre, une ouverture centrale 19 qui est ménagée dans le flasque de montage 10, entre les trois orifices 15, 16, 17. Cette ouverture centrale 19 permet d'alléger la tête d'essieu 9. Elle peut également permettre le passage d'un câble relié à un capteur, tel qu'un capteur de vitesse de roue.

Dans le mode de réalisation représenté, l'ouverture centrale 19 présente une forme générale de quadrilatère orthogonal arrondis. Une telle forme est caractérisée par deux diagonales perpendiculaires l'une à l'autre et par des sommets ainsi que des côtés arrondis. Le caractère arrondi des bords et côtés permet ainsi de limiter les concentrations de contraintes en répartissant plus uniformément les forces appliquées sur le matériau. En outre, l'une des diagonales est verticale et définit un axe de symétrie de ladite ouverture centrale. Cet axe de symétrie coïncide avec l'axe de symétrie du triangle.

Par ailleurs, comme représenté schématiquement sur la figure 4, le sommet supérieur de la forme générale de quadrilatère orthogonal à sommets arrondis est positionné en dessous de l'orifice supérieur 15 tandis que les trois autres sommets sont situés à l'extérieur du triangle. Une telle forme de l'ouverture centrale 19 permet d'augmenter sa surface et ainsi de limiter encore davantage la masse de la tête d'essieu 9.

Par ailleurs, la tête d'essieu 9 est équipée d'une plaque de renfort 20, visible sur la figure 2, qui permet notamment d'augmenter la rigidité et la résistance de la tête d'essieu 9.

La plaque de renfort 20 est avantageusement réalisée en métal et notamment en acier. Elle présente une épaisseur comprise entre 4 et 8 mm, par exemple de l'ordre de 6 mm.

La plaque de renfort 20 est disposée contre la surface externe du flasque de montage 10 et soudée à celle-ci. Elle comporte trois perçages qui sont chacun disposés en vis-à-vis de l'un des orifices 15, 16, 17 de la tête d'essieu 9. La plaque de renfort 20 comporte également une ouverture centrale de forme identique et positionnée en regard à celle de la tête d'essieu 9.

De manière avantageuse, la plaque de renfort 20 s'étend vers le bas jusqu'à proximité du plan horizontal médian de la portion du bras de suspension 2 auquel la tête d'essieu 9 est fixée. Dans le mode de réalisation représenté, le bord inférieur 21 de la plaque de renfort 20 présente une concavité 22 qui permet de diminuer la masse de la plaque de renfort 20 sans compromettre de manière significative ses capacités de renforcement.

Par ailleurs, la plaque de renfort 20 forme également avec le flasque de montage 10 de la tête d'essieu 9 un empilage créant une réserve élastique additionnelle, c'est-à-dire augmentant la capacité de la tête d'essieu 9 à se déformer de manière élastique pour absorber et stocker de l'énergie sous forme d'élasticité. Cette réserve élastique permet le maintien d'une précharge appliquée par les boulons, empêchant ainsi leur desserrage même en présence de vibrations

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, telle que définie par les revendications.

## Revendications

1. Essieu (1) pour un véhicule automobile comportant un bras de suspension (2, 3) et une tête d'essieu (9) qui est soudée audit bras de suspension (2, 3), ladite tête d'essieu (9) comportant un flasque de montage (10) comportant trois orifices (15, 16, 17) qui sont chacun destinés à recevoir un organe de fixation (18) pour fixer un organe de support de roue à ladite tête d'essieu (9).

2. Essieu (1) selon la revendication 1, dans lequel les trois orifices se composent d'un orifice supérieur (15) et de deux orifices inférieurs (16, 17) qui présentent chacun un centre, les centres des orifices (15, 16, 17) définissant un triangle qui est isocèle et dans lequel une médiane (M) du triangle qui passe par le centre de l'orifice supérieur (15) est verticale et forme un axe de symétrie du triangle.

3. Essieu (1) selon la revendication 2, dans lequel le flasque de montage (10) présente une largeur qui diminue depuis une zone inférieure dans laquelle sont ménagés les orifices inférieurs (16, 17) vers une zone supérieure dans laquelle est ménagé l'orifice supérieur (15).

4. Essieu (1) selon la revendication 2 ou 3, dans lequel le flasque de montage (10) comporte une ouverture centrale (19) qui est ménagée entre les trois orifices (15, 16, 17).

5. Essieu (1) selon la revendication 4, dans lequel l'ouverture centrale (19) présente une forme générale de quadrilatère orthogonal arrondis présentant deux diagonales perpendiculaires dont l'une est alignée avec la médiane (M) du triangle, ladite forme générale de quadrilatère orthogonal arrondis présentant un sommet supérieur disposé en-dessous de l'orifice supérieur (15) et trois autres sommets situés à l'extérieur du triangle.

6. Essieu (1) selon l'une quelconque des revendications 1 à 5, dans lequel les orifices (15, 16, 17) sont ménagés dans une portion supérieure du flasque de montage (10) qui fait saillie au-dessus du bras de suspension (2, 3).

7. Essieu (1) selon l'une quelconque des revendications 1 à 5, dans lequel la tête d'essieu (9) comporte deux ailes de fixation (11, 12) qui font saillie perpendiculairement au flasque de montage (10) de part et d'autre dudit flasque de montage (10), lesdites ailes de fixation (11, 12) comportant un bord d'accostage (13) présentant une concavité dans laquelle le bras de suspension (2, 3) est au moins partiellement inséré et le long de laquelle ledit bord d'accostage (13) est soudé au bras de suspension (2, 3).

8. Essieu (1) selon l'une quelconque des revendications 1 à 6, dans lequel la tête d'essieu (9) est formée d'une tôle emboutie présentant une épaisseur comprise entre 4 et 8 mm.

9. Essieu (1) selon l'une quelconque des revendications 1 à 8, dans lequel la tête d'essieu (9) est équipée d'une plaque de renfort (20) qui est soudée contre une face externe du flasque de montage (10), ladite plaque de renfort (20) comportant trois perçages qui sont chacun ménagés en regard de l'un des orifices (15, 16, 17).

10. Essieu (1) selon les revendications 6 et 9 prises en combinaison, dans lequel la plaque de renfort (20) s'étend vers le bas sensiblement jusqu'à un plan horizontal médian du bras de suspension (2, 3).
